# EUROPÄISCHE PATENTSCHRIFT

(11) **EP 4 482 692 B1**
(45) Veröffentlichungstag und Bekanntmachung des Hinweises auf die Patenterteilung: **05.11.2025**
(21) Anmeldenummer: 23705478.8
(22) Anmeldetag: 07.02.2023
(51) Int. Cl.: B60C 9/00, B60C 13/00, B60C 13/04, B60C 1/00

(54) **FAHRZEUGLUFTREIFEN**
PNEUMATIC VEHICLE TYRE
PNEUMATIQUE DE VÉHICULE

(30) Priorität: 21.02.2022 DE 102022201744
(43) Veröffentlichungstag der Anmeldung: 01.01.2025
(73) Patentinhaber: Continental Reifen Deutschland GmbH, 30175 Hannover (DE)
(72) Erfinder: KAHNER, Rainer, 30175 Hannover (DE); GÜTTLER, Steffen, 30175 Hannover (DE); JAHR, Michael, 30175 Hannover (DE)
(74) Vertreter: Continental Corporation
(86) Internationale Anmeldenummer: PCT/DE2023/200028
(87) Internationale Veröffentlichungsnummer: WO 2023/155959

(56) Entgegenhaltungen:
- EP-A1- 2 666 650
- DE-A1- 102019 212 714
- US-B1- 6 568 446

## Beschreibung

Die Erfindung betrifft einen Fahrzeugluftreifen mit einem Laufstreifenbereich, Seitenwandbereichen, einer Karkasseinlage aus zumindest einer Lage von in eine Karkassgummierung eingebetteten Festigkeitsträgern, mit Wulstbereichen mit Wulstkernen und Felgenkontaktbereichen und mit als äußerste Schichten auf den Seitenwandbereichen befindlichen, aus textilen Fäden bestehende Flächengebilden als Abrasions-Schutzschichten, auf deren Fäden zumindest außenseitig eine Beschichtung, welche Partikeln aus Hartstoffen enthält, aufgebracht ist, und wobei die textilen Flächengebilde jeweils einen mittleren Schichtabschnitt, einen radial äußeren Randabschnitt und einen radial inneren Randabschnitt aufweisen, wobei sich die radial äußeren Randabschnitte schulterseitig in den Laufstreifenbereich hinein und die radial inneren Randabschnitte in die Wulstbereiche oder in die Felgenkontaktbereiche erstrecken.

Derartige Fahrzeugluftreifen sind beispielsweise aus der DE 10 2019 212 714 A1 bekannt. Ist der Reifen ein Fahrradreifen, bilden bei einer Ausführung die Abrasions-Schutzschichten Nesselstreifen in jenen Bereichen der Außenseite der Wulstbereiche, die mit den Felgenhörnern in Kontakt kommen. Bei einer alternativen Ausführung erstrecken sich komplett beschichtete textile Flächengebilde entlang der Außenseite der Seitenwände und bis unter die Laufstreifenränder. Bei PKW-Reifen oder Nutzfahrzeugreifen sind die komplett beschichteten textilen Flächengebilde entweder in die Seitenwandprofile eingebaut und außenseitig von einer Schicht des Gummimaterials der Seitenwandprofile bedeckt oder an den Außenseiten der Seitenwandprofile angebracht, gegebenenfalls unter Berücksichtigung von Seitenwandbeschriftungen und dergleichen nur in Teilbereichen.

Die EP 2 666 650 A1 ebenfalls offenbart einen für die vorliegende Erfindung relevanten Reifen.

Der Erfindung liegt die Aufgabe zu Grunde, bei einem Reifen der eingangs genannten Art mit beschichteten textilen Flächengebilden an den Außenseiten der Seitenwandbereiche diese auf eine besonders dauerhaltbare Weise im Reifen zu fixieren.

Gelöst wird die gestellte Aufgabe erfindungsgemäß dadurch, dass die radial äußeren Randabschnitte der textilen Flächengebilde frei von Beschichtung sind oder Endabschnitte aufweisen, die frei von Beschichtung sind, und derart im Laufstreifenbereich einvulkanisiert sind,
wobei die Beschichtungen jeweils zumindest auf einem Teilabschnitt des mittleren Schichtabschnittes der textilen Flächengebilde aufgebracht ist.

Bei einer besonders bevorzugten Ausführung sind auch die radial inneren Randabschnitte der textilen Flächengebilde (10) frei von Beschichtung oder sie weisen Endabschnitte auf, die frei von Beschichtung sind, und sie sind derart in die Wulstbereiche einvulkanisiert sind.

Bei einem gemäß der Erfindung ausgeführten Reifen sind die textilen Flächengebilde außenseitig nicht komplett mit der Beschichtung versehen, sondern sie weisen radial äußere Randabschnitte, bevorzugt auch radial innere Randabschnitte, ohne Beschichtung auf, sodass die textilen Flächengebilde in den Reifen einvulkanisiert und somit besonders haltbare Weise fixiert sind.

Besonders bevorzugt ist ferner eine Ausführung, bei welcher die Beschichtung jeweils ausschließlich auf den mittleren Schichtabschnitt der textilen Flächengebilde und bis zu den Randabschnitten reichend aufgebracht ist. Bei dieser Ausführung sind daher die beiden Randabschnitte nicht beschichtet. Die radial äußeren Randabschnitte sind daher in den schulterseitigen Laufstreifenbereichen zwischen Bauteilen, die aus einem Gummimaterial bestehen oder ein Gummimaterial enthalten, einvulkanisiert. Die radial inneren Randabschnitte sind bei bevorzugten Ausführungen ebenfalls in den Wulstbereichen zwischen solchen Bauteilen einvulkanisiert.

Die Beschichtung muss den mittleren Schichtabschnitt nicht komplett bedecken, sondern kann vorteilhafterweise auf einen Bereich von zumindest 20 %, insbesondere zumindest 40 % des mittleren Schichtabschnittes der textilen Flächengebilde aufgebracht sein. Außerhalb der Beschichtung bleibt daher die Möglichkeit bestehen, auf den Seitenwandbereichen Beschriftungen anzubringen.

Um eine gute Fixierung oder Einvulkanisierung der Randabschnitte sicherzustellen, ist es vorteilhaft, wenn die Randabschnitte eine Breite aufweisen, welche jeweils mindestens 5,00 mm beträgt.

Vorteilhaft ist auch eine Ausführung, bei welcher die radial inneren Randabschnitte der textilen Flächengebilde bis in den Bereich axial neben die Wulstkerne reichen.

Die textilen Flächengebilde können unterschiedliche Ausgestaltungen besitzen. Bevorzugt sind dabei Ausführungen der textilen Flächengebilde als Kordgewebe - mit Festigkeitsträgern, die unter einem Winkel von 10° bis 50°, vorzugswiese von 20° bis 40°, zur radialen Richtung verlaufen, ferner als Gewirk, als Gestrick oder als ein Kreuzgewebe bzw. in Ausführungen, welche solche Gewebe, Gewirke oder Gestricke aufweisen. Je nach dem Typ des Fahrzeugluftreifens kann die für diesen Reifen besonders geeignete Ausführung gewählt werden.

Sind die textilen Flächengebilde zumindest innenseitig gummiert oder sogar in eine Gummierung eingebettet, so lassen sie sich auf besonders haltbare Weise beim Vulkanisieren des Reifens mit den betreffenden Reifenbauteilen verbinden.

Die Beschichtung wird dabei vorteilhafterweise jeweils ausschließlich auf der Außenseite der textilen Flächengebilde aufgebracht.

Die in der Beschichtung enthaltenen Hartpartikel können aus unterschiedlichen Materialien bestehen. Besonders bevorzugt hinsichtlich der Abrasionseigenschaften sind dabei Partikel aus keramischen Hartstoffen, insbesondere aus Karbiden, Nitriten und/oder Boriden, ferner Partikel aus Glas, aus glasartigen Materialien oder aus Metall, beispielsweise aus Edelstahl.

Besonders gute Abrasionseigenschaften weisen Beschichtungen mit Partikeln auf, deren durchschnittliche Partikelgröße, bezogen auf sämtliche Partikel oder auf zumindest 95 % der Partikel im Bereich von 0,10 µm bis 100 µm, insbesondere von 1 µm bis 80 µm und besonders bevorzugt von 10 µm bis 50 µm, beträgt. Die Bestimmung der durchschnittlichen Partikelgröße oder der Größe von zumindest 95 % der Partikel erfolgt beispielsweise mittels Laserbeugung.

Die Beschichtung stammt ferner vorzugsweise von einer außenseitig auf die textilen Flächengebilde vor deren Einbau aufgebrachten Suspension, die einen Masseanteil an Partikeln von 5 % bis 10 % enthielt.

Die Erfindung betrifft ferner einen Fahrzeugluftreifen, welcher ein Reifen für Personenkraftwagen, ein Reifen für Light-Trucks, ein Nutzfahrzeugreifen oder ein Busreifen ist und in den Wulstbereichen aus einem Gummimaterial bestehende oder ein Gummimaterial aufweisende Wulstschutzbauteile, wie Rim Strips oder Hornprofile aufweist. Bei Nutzfahrzeugreifen oder Busreifen können solche Wulstschutzbauteile auch Wulstschutzstreifen, aus einem gummierten Gewebe (Kordgewebe) bestehende Verstärkungsstreifen, sein. Bei den erwähnten Reifentypen ist es von besonderem Vorteil, wenn sich die radial inneren Randabschnitte der textilen Flächengebilde in den Wulstbereichen jeweils bis unter einem der aus einem Gummimaterial bestehenden oder ein Gummimaterial aufweisenden Wulstschutzbauteilen erstrecken und derart in die Wulstbereiche einvulkanisiert sind.

Bei diesen Reifentypen können die textilen Flächengebilde unmittelbar auf die Karkasseinlage oder auf die Außenseite von Seitenwandprofilen aufgebracht sein.

Ein Aufbringen unmittelbar auf die Karkasseinlage ist mit dem Vorteil verbunden, dass die Seitenwandbereiche dünn ausführbar sind, wodurch das Reifengewicht und damit der Rollwiderstand des Reifens reduziert werden.

Die Erfindung betrifft insbesondere einen Fahrzeugluftreifen, welcher ein Reifen für Personenkraftwagen oder Light-Trucks ist, und bei welchem zum Laufstreifenbereich schulterseitige Winggummis gehören, welcher ferner einen Gürtelverband aus mindestens zwei Gürtellagen und Hornprofile in den Wulstbereichen aufweist. Bei derartigen Reifen ist es bevorzugt, wenn die textilen Flächengebilde jeweils unmittelbar auf die Karkasseinlage aufgebracht sind, wobei die radial äußeren Randabschnitte der textilen Flächengebilde die Karkasseinlage zumindest unterhalb der Winggummis und die radial inneren Randabschnitte der textilen Flächengebilde die Karkasseinlage unterhalb der Hornprofile bedecken. Diese Ausgestaltung zeichnet sich vor allem durch ein vermindertes Reifengewicht und einen verminderten Rollwiderstand aus.

Bei PKW-Reifen oder Reifen für Light-Trucks ist es ferner bevorzugt, wenn die radial äußeren Randabschnitte der textilen Flächengebilde jeweils bis in den Bereich innerhalb der radial inneren Gürtellage oder eines Gürtelkantenpolster reichen, sodass eine besonders gute Fixierung dieser Randabschnitte sichergestellt ist.

Ist ein gemäß der Erfindung ausgeführter Fahrzeugluftreifen ein Fahrradreifen oder ein Diagonalreifen, bei welchem bekannter- und üblicherweise kein gesonderter, an den Felgenhörnern anliegender Wulstbauteil in den Wulstbereichen vorgesehen ist, sind die radial inneren Randabschnitte der textilen Flächengebilde in den Wulstbereichen jeweils unmittelbar auf den Felgenkontaktbereichen aufgebracht, bevorzugt unbeschichtet oder zumindest nur über einen Teilabschnitt beschichtet.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Teilquerschnitt eines Fahrzeugluftreifens mit einer Ausführungsvariante der Erfindung und
Fig. 2 einen Teilquerschnitt eines Fahrzeugluftreifens mit einer weiteren Ausführungsvariante der Erfindung.

Reifen gemäß der Erfindung sind Fahrzeugluftreifen in Diagonal- oder Radialbauart für Personenkraftwagen, inklusive Mini-Vans oder SUVs, Reifen für Light-Trucks (leichte LKW mit zGM ≤ 7,5 t), Zweiradreifen inkl. Fahrradreifen, Nutzfahrzeugreifen oder Busreifen.

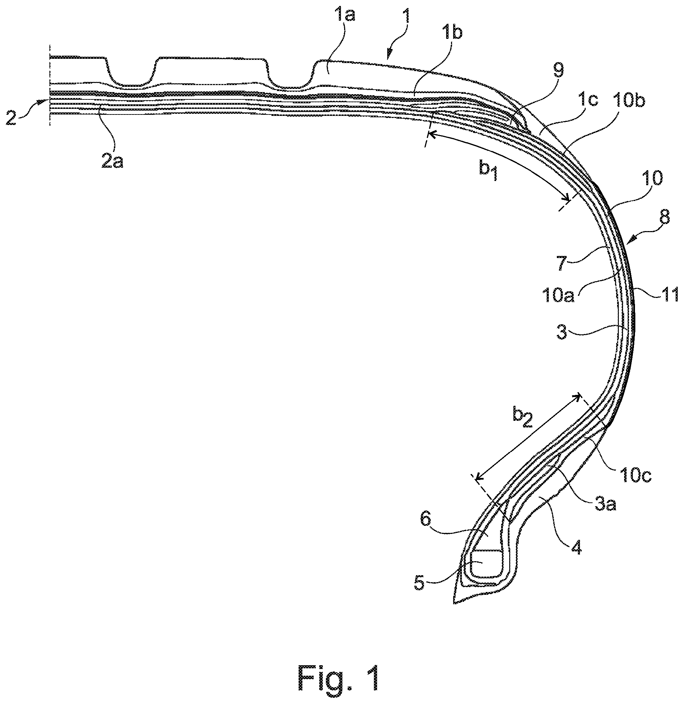

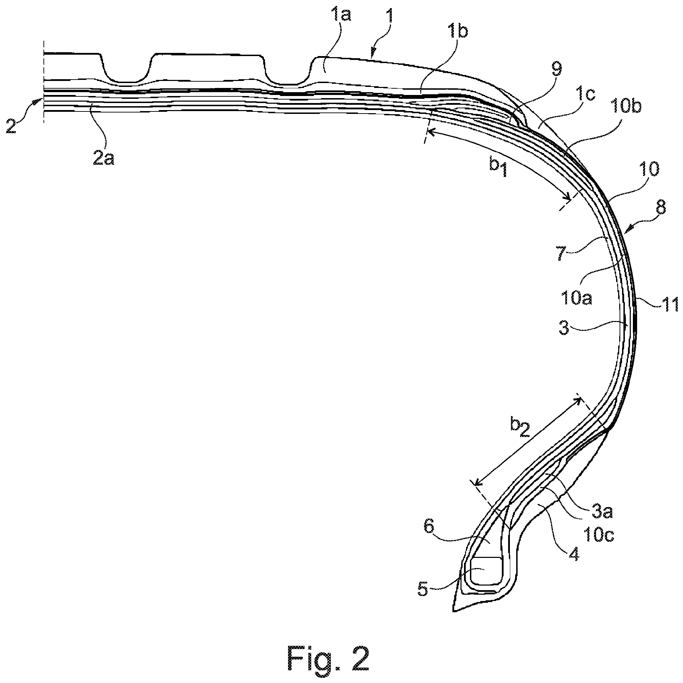

Bevorzugte Ausführungen bei einem PKW-Reifen in Radialbauart werden nachfolgend anhand der Fig. 1 und Fig. 2 näher beschrieben, Fig.1 und 2 zeigen Teilquerschnitte eines PKW-Reifens mit einem profilierten Laufstreifenbereich 1 mit in den Schulterbereichen des Laufstreifenbereiches 1 befindlichen Winggummis 1c, ferner mit einem radial innerhalb des Laufstreifenbereiches 1 befindlichen Gürtelverband 2, einer in den Ausführungsbeispielen einlagigen Karkasseinlage 3, Wulstbereichen mit Hornprofilen 4 und Wulstkernen 5 mit auf diesen sitzenden Kernprofilen 6, einer luftdichten Innenschicht 7 und mit Seitenwandbereichen 8 zwischen den Winggummis 1c und den Wulstbereichen. Die Seitenwandbereiche 8 weisen keine der üblichen separaten, reifenaußenseitigen Seitenwandprofile auf.

Der Laufstreifenbereich 1 weist bei den gezeigten Ausführungsbeispielen außer den Winggummis 1c eine radial äußere Laufstreifenschicht 1a - eine Laufstreifencap - und eine radial innere Laufstreifenschicht 1b - eine Laufstreifenbase - auf. In der radial äußeren Laufstreifenschicht 1a sind die zur Profilierung des Laufstreifenbereiches 1 gehörenden Strukturen, wie Rillen und Einschnitte, ausgebildet. Der Gürtelverband 2 ist üblicherweise mit einer Gürtelbandage bedeckt und weist insbesondere zwei Gürtellagen 2a auf, welche jeweils in an sich bekannter Weise in eine Gürtelgummierung eingebettete Festigkeitsträger, insbesondere Stahlkorde, aufweisen. Bei den gezeigten Ausführungsbeispielen sind ferner im Bereich der Gürtelkanten der Gürtellagen 2a Gürtelkantenpolster 9 verbaut.

Die Karkasseinlage 3 verläuft radial innerhalb des Laufstreifenbereiches 1 zwischen dem Gürtelverband 2 und der Innenschicht 7, ist außerhalb des Gürtelverbandes 2 entlang der Innenschicht 7 zu den Wulstbereichen geführt, umläuft die Wulstkerne 5 von innen nach außen und endet bei den gezeigten Ausführungen zwischen den Kernprofilen 6 und den Hornprofilen 4 mit Karkasshochschlägen 3a.

Die Karkasseinlage 3 weist in eine Karkassgummierung eingebettete, insbesondere in bekannter Weise ausgeführte Festigkeitsträger auf, welche in den Seitenwandbereichen 8 des Reifens zumindest im Wesentlichen in radialer Richtung verlaufen. Die Festigkeitsträger bestehen insbesondere aus einem textilen Material, beispielsweise aus Polyester, Rayon oder Polyamid. Die Karkasseinlage 3 weist eine Dicke auf, welche, je nach Reifentyp 0,80 mm bis 1,80 mm beträgt. Die Festigkeitsträger der Karkasseinlage 3 sind daher in Folge ihrer Einbettung sowohl außen- als auch innenseitig mit einer dünnen Schicht der erwähnten Karkassgummierung bedeckt.

Je ein aus textilen Fäden bestehendes Flächengebilde 10 bedeckt reifenaußenseitig mit einem mittleren Schichtabschnitt 10a die Karkasseinlage 3 zwischen den Winggummis 1c und den Wulstbereichen und mit Randabschnitten 10b und 10c unterhalb der Hornprofile 4 und zumindest unterhalb der Winggummis 1c. Das textile Flächengebilde 10 ist ein Kordgewebe, ein Gewirk, ein Gestrick oder ein Kreuzgewebe bzw. Netzgewebe oder weist ein solches Gewebe, Gewirk oder Gestrick auf. Die Randabschnitte 10b reichen alternativ bis in den Bereich radial innerhalb des radial inneren Gürtelkantenpolsters 9 oder der radial inneren Gürtellage 2a. Die Breiten b₁ und b₂ der Randabschnitte 10b und 10c betragen jeweils mindestens 5,00 mm. Erstreckt sich der radial äußere Randabschnitt 10b der textilen Flächengebilde 10 bis in den Bereich radial innerhalb der radial inneren Gürtellage 2a beträgt die Überlappungsbreite mit der Gürtellage 2a zumindest 5,00 mm und insbesondere bis zu 15,00 mm. Die radial inneren Randabschnitte 10c der textilen Flächengebilde 10 reichen bei alternativen Ausführungen bis in den Bereich axial neben den Wulstkernen 5.

Ist das textile Flächengebilde 10 ein Kreuzgewebe mit zwei zueinander gekreuzt verlaufenden, untereinander jeweils zumindest im Wesentlichen parallel verlaufenden Fäden wird es vorzugsweise derart am Reifen positioniert, dass diese Fäden gleichermaßen relativ zur radialen Richtung des Reifens verlaufen. Die Fäden des textilen Flächengebildes 10 bestehen insbesondere aus einem der üblichen, in Fahrzeugreifen verwendeten textilen Materialen, wie Polyester, Baumwolle, Rayon, Polyamid, insbesondere Nylon, Polyaramid, wie beispielsweise Kevlar ^{®}, Nomex ^{®} oder Twaron ^{®}, Polyesterpolyarylat, wie beispielsweise Vectran ^{®}, oder Hybrid-Materialien, wie einer Kombination aus Nylon und Aramid oder Nylon und Polyesterpolyarylat. Die Fäden können Filamente, Garne oder Korde sein.

Das textile Flächengebilde 10 kann an der der Karkasseinlage 3 zugewandten Seite gummiert sein, alternativ kann das textile Flächengebilde 10 beidseitig gummiert sein bzw. in eine Gummierung eingebettet sein. Sowohl ein nicht gummiertes textiles Flächengebilde 10 als auch ein gummiertes textiles Flächengebilde 10 wird bevorzugt zumindest an jener Seite, die mit der Karkasseinlage 3 in Kontakt gebracht wird, mit einer Gummilösung oder einem Gummihaftsystem behandelt. Als Gummihaftsystem eignet sich beispielsweise ein Haftsystem aus Haftimprägnierungen, besonders bevorzugt ausgewählt aus der Gruppe bestehend aus RFL-Dips, umfassend Resorcin, Formaldehyd und Latex, und wässrigen Dispersionen, wobei die wässrigen Dispersionen im Wesentlichen frei sind von freiem Resorcin sowie Resorcin-Vorkondensaten, insbesondere Resorcin-Formaldehyd-Vorkondensaten, und frei sind von freiem Formaldehyd sowie Formaldehyd freisetzenden Substanzen

Die Fäden des textilen Flächengebildes 10 sind außenseitig zumindest in Teilbereichen mit einer Beschichtung 11 versehen, die eine Abrasions-Schutzschicht bildet. Bei der in Fig. 1 gezeigten Ausführung sind jeweils die Fäden im mittleren Schichtabschnitt 10a des textilen Flächengebildes 10 mit der Beschichtung 11 versehen. Bei alternativen Ausführungen erstreckt sich die Beschichtung 11 lediglich über einen Teilabschnitt des mittleren Schichtabschnittes 10a des textilen Flächengebildes 10, beispielsweise über einen unmittelbar an den jeweiligen Winggummi 1c oder das jeweilige Hornprofil 4 anschließenden Teilabschnitt oder über einen Teilabschnitt, welcher sich in einem Abstand vom jeweiligen Winggummi 1c und dem jeweiligen Hornprofil 4 befindet. Vorzugsweise sind zumindest 20 %, insbesondere zumindest 40 %, der vom mittleren Schichtabschnittes 10a des textilen Flächengebildes 10 eingenommenen Fläche mit der eine Abrasion-Schutzschicht bildenden Beschichtung 11 versehen.

Bei der in Fig. 2 gezeigten Ausführung erstreckt sich die Beschichtung 11 nicht nur über den mittleren Schichtabschnitt 10a des textiles Flächengebildes 10, sondern jeweils auch über einen Teilabschnitt beider Randabschnitte 10b, 10c, wobei die Randabschnitte 10b, 10c des textilen Flächengebildes 10 Endabschnitte aufweisen, die über eine Breite von beispielsweise mindestens 5,00 mm frei von der Beschichtung 11 sind.

Die Beschichtung 11 auf den Randabschnitten 10b, 10c wird vor dem Einbau der textiles Flächengebilden 10 in den Rohreifen mit einem Haftdip, wie bereits beschrieben, oder einem üblichen Tackifier, wie er zur Einstellung der Konfektionsklebrigkeit verwendet wird, behandelt.

Die Beschichtung 11 enthält Partikel aus Hartstoffen, wie keramische Hartstoffe, aus Glas, aus glasartigen Materialien oder aus Metallen, etwa Edelstahl, welche für die erwünschte Wirkung der beschichteten textilen Fäden der Flächengebilde 10 als Abrasions-Schutzschichten sorgen. Die Partikel aus keramischen Hartstoffen sind insbesondere Karbide, Nitride und/oder Boride.

Die Beschichtung 11 wird aus einer Suspension hergestellt, welcher zumindest ein Lösungsmittel, ein oder mehrere Bindemittel und die erwähnten Partikel enthält.

Als Lösungsmittel kommen insbesondere Wasser oder andere protische Lösungsmittel, beispielsweise Alkohole, in Frage. Bindemittel sind insbesondere solche, die eine gute Anbindung zu den Fäden der textilen Flächengebilden 10 sicherstellen und eine gute Einbindung der Partikel bewirken. Besonders gut geeignet sind Bindemittel auf Basis von Polyurethan, beispielsweise Polyurethandispersionen aus Wasser und Polyurethan-Kunststoffen. In Frage kommen auch Bindemittel auf der Basis von zumindest einem vulkanisierbaren Polymer, wie Polyisopren, Polybutadien, Styrolbutadien-Kautschuk und/oder Naturkautschuk.

Eine typische Suspension setzt sich beispielsweise wie folgt zusammen (Massenanteile in %):
Partikel: 5 % bis 10 %,
Lösungsmittel: 40 % bis 60 %,
Rest Bindemittel.

Bei den dargestellten Ausführungsvarianten sind die Fäden der textilen Flächengebilde 10 im betreffenden Abschnitt weitgehend lediglich an der einen Seite, nämlich der Reifenaußenseite, beschichtet. Bei einer alternativen Ausführung sind die Fäden der textilen Flächengebilde 10 weitgehend komplett beschichtet. Die Suspension kann beispielsweise durch Auftragen, wie Bestreichen, oder durch Dippen oder Eintauchen aufgebracht werden.

Die Karkassgummierung kann aus einer Ruß enthaltenden oder einer rußfreien, beispielsweise Kieselsäure enthaltende Kautschukmischungen gefertigt sein. Die Karkassgummierung kann ferner ein Alterungsschutzmittel, welches üblicherweise in Kautschukmischungen für Seitenwandprofile eingebracht wird, enthalten, beispielsweise einen Oxidationsstabilisator, wie ein p-Phenylendiamin, substituiertes Phenol oder Bisphenol, ein Dihydrochinolin, ein Diphenylamin und dergleichen.

Die üblicherweise auf Seitenwänden anzubringende Seitenwandbeschriftung kann beispielsweise im Gummimaterial der Außenseite der Wulstbereiche, an deren radial außerhalb des Felgenhorns der Felge sichtbaren Bereiche, ausgebildet werden.

Bei einer alternativen, nicht dargestellten Ausführung weist der Reifen übliche Seitenwandprofile aus einem Gummimaterial auf. Die beschichteten textilen Flächengebilde sind auf analoge Weise wie beschrieben ausgeführt auf der Außenseite der Seitenwandprofile aufgebracht.

Weitere entsprechende und weitgehend analoge Ausführungen der Erfindung sind bei anderen Reifentypen in Radial- oder Diagonalbauart, wie weiter ober bereits erwähnt, möglich.

### Bezugszeichenliste

- 1: Laufstreifenbereich
- 1a: äußerste Laufstreifenschicht, Laufstreifencap
- 1b: innere Laufstreifenschicht, Laufstreifenbase
- 1c: Winggummi
- 2: Gürtelverband
- 2a: Gürtellage
- 3: Karkasseinlage
- 3a: Karkasshochschlag
- 4: Hornprofil
- 5: Wulstkern
- 6: Kernprofil
- 7: Innenschicht
- 8: Seitenwandbereich
- 9: Gürtelkantenpolster
- 10: textiles Flächengebilde
- 10a: mittlerer Schichtabschnitt
- 10b, 10c: Randabschnitt
- 11: Beschichtung
- b₁, b₂: Breite

## Patentansprüche

1. Fahrzeugluftreifen mit einem Laufstreifenbereich (1), Seitenwandbereichen (8), einer Karkasseinlage (3) aus zumindest einer Lage von in eine Karkassgummierung eingebetteten Festigkeitsträgern, mit Wulstbereichen mit Wulstkernen (5) und Felgenkontaktbereichen und mit als äußerste Schichten auf den Seitenwandbereichen (8) befindlichen, aus textilen Fäden bestehende Flächengebilden (10) als Abrasions-Schutzschichten, auf deren Fäden zumindest außenseitig eine Beschichtung (11), welche Partikeln aus Hartstoffen enthält, aufgebracht ist, und wobei die textilen Flächengebilde (10) jeweils einen mittleren Schichtabschnitt (10a), einen radial äußeren Randabschnitt (10b) und einen radial inneren Randabschnitt (10c) aufweisen, wobei sich die radial äußeren Randabschnitte (10b) schulterseitig in den Laufstreifenbereich (1) hinein und die radial inneren Randabschnitte (10c) in die Wulstbereiche oder in die Felgenkontaktbereiche erstrecken,
wobei die Beschichtung (11) jeweils zumindest auf einem Teilabschnitt des mittleren Schichtabschnittes (10a) der textilen Flächengebilde (10) aufgebracht ist,
**dadurch gekennzeichnet,**
**dass** die radial äußeren Randabschnitte (10b) der textilen Flächengebilde (10) frei von Beschichtung (11) sind oder Endabschnitte aufweisen, die frei von Beschichtung (11) sind, und derart im Laufstreifenbereich (1) einvulkanisiert sind.

2. Fahrzeugluftreifen nach Anspruch 1, **dadurch gekennzeichnet, dass** die radial inneren Randabschnitte (10c) der textilen Flächengebilde (10) frei von Beschichtung sind oder Endabschnitte, die frei von Beschichtung sind, aufweisen und derart in die Wulstbereiche einvulkanisiert sind.

3. Fahrzeugluftreifen nach Anspruch 1, **dadurch gekennzeichnet, dass** die Beschichtung (11) jeweils ausschließlich im mittleren Schichtabschnitt (10a) der textilen Flächengebilde (10) und bis zu den Randabschnitten (10b, 10c) reichend aufgebracht ist.

4. Fahrzeugluftreifen nach Anspruch 1 oder 3, **dadurch gekennzeichnet, dass** die Beschichtung (11) in einem Bereich von zumindest 20 %, insbesondere zumindest 40 %, des mittleren Schichtabschnittes (10a) der textilen Flächengebilde (10) aufgebracht ist.

5. Fahrzeugluftreifen nach einem der Ansprüche 1 bis 4, **dadurch gekennzeichnet, dass** die Randabschnitte (10b, 10c) der textilen Flächengebilde (10) eine Breite (b₁, b₂) aufweisen, welche jeweils mindestens 5,00 mm beträgt.

6. Fahrzeugluftreifen nach einem der Ansprüche 1 bis 5, **dadurch gekennzeichnet, dass** die radial inneren Randabschnitte (10c) der textilen Flächengebilde (10) bis in den Bereich axial neben die Wulstkerne (5) reichen.

7. Fahrzeugluftreifen nach einem oder mehreren der Ansprüche 1 bis 6, **dadurch gekennzeichnet, dass** das textile Flächengebilde (10) ein Kordgewebe, ein Gewirk, ein Gestrick oder ein Kreuzgewebe ist oder ein solches Gewebe, Gewirk oder Gestrick aufweist.

8. Fahrzeugluftreifen nach einem oder mehreren der Ansprüche 1 bis 7, **dadurch gekennzeichnet, dass** die textilen Flächengebilde (10) innenseitig gummiert sind oder in eine Gummierung eingebettet sind.

9. Fahrzeugluftreifen nach einem oder mehreren der Ansprüche 1 bis 8, **dadurch gekennzeichnet, dass** die Beschichtung (11) jeweils ausschließlich auf der Außenseite der textilen Flächengebilde (10) aufgebracht ist.

10. Fahrzeugluftreifen nach einem oder mehreren der Ansprüche 1 bis 9, **dadurch gekennzeichnet, dass** die Hartpartikel Partikel aus keramischen Hartstoffen, insbesondere aus Karbiden, Nitriden und/oder Boriden, ferner Partikel aus Glas, aus glasartigen Materialien oder aus Metall sind.

11. Fahrzeugluftreifen nach einem oder mehreren der Ansprüche 1 bis 10, **dadurch gekennzeichnet, dass** die Partikel eine durchschnittliche Partikelgröße, bezogen auf sämtliche Partikel oder auf zumindest 95 % der Partikel, im Bereich von 0,10 µm bis 100 µm, insbesondere von 1 µm bis 80 µm und besonders bevorzugt von 10 µm bis 50 µm, aufweisen.

12. Fahrzeugluftreifen nach einem oder mehreren der Ansprüche 1 bis 11, **dadurch gekennzeichnet, dass** die Beschichtung (11) von einer Suspension stammt, die einen Masseanteil an Partikeln von 5 % bis 10 % enthielt.

13. Fahrzeugluftreifen, welcher ein Reifen für Personenkraftwagen, ein Reifen für Light-Trucks, ein Nutzfahrzeugreifen oder ein Busreifen ist und in den Wulstbereichen aus einem Gummimaterial bestehende oder ein Gummimaterial aufweisende Wulstschutzbauteile, wie Rimstrips oder Hornprofile (4), aufweist, nach einem oder mehreren der Ansprüche 1 bis 12, **dadurch gekennzeichnet, dass** sich die radial inneren Randabschnitte (10c) der textilen Flächengebilde (10) in den Wulstbereichen jeweils bis unter einen der aus Gummimaterial bestehenden oder Gummimaterial aufweisenden Wulstschutzbauteile erstrecken.

14. Fahrzeugluftreifen nach Anspruch 13, **dadurch gekennzeichnet, dass** die textilen Flächengebilde (10) jeweils entweder unmittelbar auf die Karkasseinlage (3) oder auf ein Seitenwandprofil aufgebracht sind.

15. Fahrzeugluftreifen, welcher ein Reifen für Personenkraftwagen oder Light-Trucks ist, einen Laufstreifenbereich (1) mit schulterseitigen Winggummis (1c), einen Gürtelverband (2) aus mindesten zwei Gürtellagen (2a) und Hornprofile (4) aufweist, nach einem oder mehreren der Ansprüche 1 bis 14, **dadurch gekennzeichnet,**
**dass** die textilen Flächengebilde (10) jeweils unmittelbar auf die Karkasseinlage (3) aufgebracht sind, wobei die radial äußeren Randabschnitte (10b) der textilen Flächengebilde (10) die Karkasseinlage (3) zumindest in den Bereichen unterhalb der Winggummis (1c) und die radial inneren Randabschnitte (10c) der textilen Flächengebilden (10) die Karkasseinlage (3) unterhalb der Hornprofile (4) bedecken.

16. Fahrzeugluftreifen nach Anspruch 15, **dadurch gekennzeichnet, dass** die radial äußeren Randabschnitte (10b) der textilen Flächengebilde (10) jeweils bis in den Bereich innerhalb der radial inneren Gürtellage (2a) oder eines Gürtelkantenpolsters (9) reichen.

17. Fahrzeugluftreifen, welcher ein Fahrradreifen oder ein Diagonalreifen ist, nach Anspruch 1, **dadurch gekennzeichnet, dass** die radial inneren Randabschnitte (10c) der textilen Flächengebilde (10) in den Wulstbereichen jeweils unmittelbar auf die Felgenkontaktbereiche aufgebracht sind, frei von Beschichtung sind oder zumindest zum Teil mit der Beschichtung (11) versehen sind.

## Claims

1. Pneumatic vehicle tyre comprising: a tread region (1); sidewall regions (8); a carcass inlay (3) comprising at least one ply of reinforcing elements embedded in a carcass rubberizing compound; bead regions with bead cores (5) and rim contact regions; and fabrics (10) which are made up of textile threads, are located on the sidewall regions (8) as outermost layers and act as abrasion protection layers, a coating (11) that contains particles of hard materials having been applied to the threads of the fabrics, at least on the outside, and wherein the textile fabrics (10) each have a middle layer portion (10a), a radially outer peripheral portion (10b) and a radially inner peripheral portion (10c), wherein the radially outer peripheral portions (10b) on the shoulder side extend into the tread region (1) and the radially inner peripheral portions (10c) extend into the bead regions or into the rim contact regions,
the coating (11) having been applied in each case at least to part of the middle layer portion (10a) of the textile fabrics (10),
**characterized**
**in that** the radially outer peripheral portions (10b) of the textile fabrics (10) do not have any coating (11) or have end portions which do not have any coating (11) and are in this way vulcanized into the tread region (1).

2. Pneumatic vehicle tyre according to Claim 1, **characterized in that** the radially inner peripheral portions (10c) of the textile fabrics (10) do not have any coating or have end portions which do not have any coating and are in this way vulcanized into the bead regions.

3. Pneumatic vehicle tyre according to Claim 1, **characterized in that** the coating (11) has been applied in each case exclusively in the middle layer portion (10a) of the textile fabrics (10) and up to the peripheral portions (10b, 10c).

4. Pneumatic vehicle tire according to Claim 1 or 3, **characterized in that** the coating (11) is applied in a region of at least 20%, in particular at least 40%, of the middle layer portion (10a) of the textile fabrics (10).

5. Pneumatic vehicle tyre according to one of Claims 1 to 4, **characterized in that** the peripheral portions (10b, 10c) of the textile fabrics (10) have a width (b₁, b₂) of at least 5.00 mm in each case.

6. Pneumatic vehicle tyre according to any one of Claims 1 to 5, **characterized in that** the radially inner peripheral portions (10c) of the textile fabrics (10) extend up to the region axially next to the bead cores (5).

7. Pneumatic vehicle tyre according to one or more of Claims 1 to 6, **characterized in that** the textile fabric (10) is a cord fabric, a knitted fabric or a cross-woven fabric or comprises such a woven fabric or knitted fabric.

8. Pneumatic vehicle tyre according to one or more of Claims 1 to 7, **characterized in that** the textile surfaces (10) are rubberized on the inside or embedded in a rubberizing compound.

9. Pneumatic vehicle tyre according to one or more of Claims 1 to 8, **characterized in that** the coating (11) has been applied exclusively to the outer side of the textile fabrics (10).

10. Pneumatic vehicle tyre according to one or more of Claims 1 to 9, **characterized in that** the hard particles are particles of ceramic hard materials, in particular carbides, nitrides and/or borides, further particles of glass, of glass-like materials or of metal.

11. Pneumatic vehicle tyre according to one or more of Claims 1 to 10, **characterized in that** the particles have an average particle size, based on all the particles or at least 95% of the particles, ranging from 0.10 µm to 100 µm, in particular from 1 µm to 80 µm and particularly preferably from 10 µm to 50 µm.

12. Pneumatic vehicle tyre according to one or more of Claims 1 to 11, **characterized in that** the coating (11) originates from a suspension containing a proportion by mass of particles of 5% to 10%.

13. Pneumatic vehicle tyre, which is a tyre for passenger cars, a tyre for light trucks, a commercial vehicle tyre or a bus tyre and comprises, in the bead regions, bead protection components, such as rim strips or flange profiles (4), comprising or consisting of a rubber material according to one or more of Claims 1 to 12, **characterized in that** the radially inner peripheral portions (10c) of the textile fabrics (10) extend in the bead regions in each case to underneath one of the bead protection components consisting of rubber material or comprising rubber material.

14. Pneumatic vehicle tyre according to Claim 13, **characterized in that** the textile fabrics (10) have been applied either directly to the carcass inlay (3) or to a sidewall profile in each case.

15. Pneumatic vehicle tyre, which is a tyre for passenger cars or light trucks and comprises a tread region (1) with wing rubbers (1c) at the shoulders, a belt assembly (2) comprising at least two belt plies (2a) and flange profiles (4), according to one or more of Claims 1 to 14, **characterized**
**in that** the textile fabrics (10) have been applied directly to the carcass inlay (3) in each case, the radially outer peripheral portions (10b) of the textile fabrics (10) covering the carcass inlay (3) at least in the regions below the wing rubbers (1c) and the radially inner peripheral portions (10c) of the textile fabrics (10) covering the carcass inlay (3) underneath the flange profiles (4).

16. Pneumatic vehicle tyre according to Claim 15, **characterized in that** the radially outer peripheral portions (10b) of the textile fabrics (10) extend up to the region inside the radially inner belt ply (2a) or a belt edge cushion (9) in each case.

17. Pneumatic vehicle tyre, which is a bicycle tyre or a cross-ply tyre, according to Claim 1, **characterized in that** the radially inner peripheral portions (10c) of the textile fabrics (10) in the bead regions in each case have been directly applied to the rim contact regions, do not have any coating or have been at least partially provided with the coating (11).

## Revendications

1. Pneumatique de véhicule avec une zone de bande de roulement (1), des zones de paroi latérale (8), un insert de carcasse (3) composé d'au moins une couche de supports de résistance noyés dans un caoutchouc de carcasse, avec des zones de talon avec des tringles (5) et des zones de contact avec la jante et avec, en tant que couches les plus extérieures se trouvant sur les zones de paroi latérale (8), des structures de surface (10) constituées de fils textiles en tant que couches de protection contre l'abrasion, sur les fils desquelles est appliqué, au moins du côté extérieur, un revêtement (11) contenant des particules de matières dures, et les structures de surface textiles (10) présentant chacune une section de couche centrale (10a), une section de bord radialement extérieure (10b) et une section de bord radialement intérieure (10c), les sections de bord radialement extérieures (10b) s'étendant côté épaulement dans la zone de bande de roulement (1) et les sections de bord radialement intérieures (10c) s'étendant dans les zones de talon ou dans les zones de contact avec la jante,
le revêtement (11) étant appliqué respectivement au moins sur une section partielle de la section de couche centrale (10a) de la structure de surface textile (10),
**caractérisé**
**en ce que** les sections de bord radialement extérieures (10b) de la structure de surface textile (10) sont exemptes de revêtement (11) ou présentent des sections d'extrémité exemptes de revêtement (11) et sont ainsi vulcanisées dans la zone de bande de roulement (1).

2. Pneumatique de véhicule selon la revendication 1, **caractérisé en ce que** les sections de bord radialement intérieures (10c) des structures de surface textiles (10) sont exemptes de revêtement ou présentent des sections d'extrémité exemptes de revêtement et sont ainsi vulcanisées dans les zones de talon.

3. Pneumatique de véhicule selon la revendication 1, **caractérisé en ce que** le revêtement (11) est appliqué exclusivement dans la section de couche centrale (10a) de la structure de surface textile (10) et jusqu'aux sections de bord (10b, 10c).

4. Pneumatique de véhicule selon la revendication 1 ou 3, **caractérisé en ce que** le revêtement (11) est appliqué dans une zone d'au moins 20 %, notamment d'au moins 40 %, de la section de couche centrale (10a) de la structure textile plane (10).

5. Pneumatique de véhicule selon l'une quelconque des revendications 1 à 4, **caractérisé en ce que** les sections de bord (10b, 10c) des structures textiles planes (10) présentent une largeur (b₁, b₂) qui est respectivement d'au moins 5,00 mm.

6. Pneumatique de véhicule selon l'une quelconque des revendications 1 à 5, **caractérisé en ce que** les sections de bord radialement intérieures (10c) des structures textiles planes (10) s'étendent jusque dans la zone axialement adjacente aux tringles (5).

7. Pneumatique de véhicule selon une ou plusieurs des revendications 1 à 6, **caractérisé en ce que** la structure textile plane (10) est un tissu cordé, un tricot, un article à mailles ou un tissu croisé, ou présente un tel tissu, tricot ou article à mailles.

8. Pneumatique de véhicule selon une ou plusieurs des revendications 1 à 7, **caractérisé en ce que** les structures textiles planes (10) sont caoutchoutées du côté intérieur ou sont noyées dans un caoutchouc.

9. Pneumatique de véhicule selon une ou plusieurs des revendications 1 à 8, **caractérisé en ce que** le revêtement (11) est appliqué exclusivement sur le côté extérieur de la structure textile plane (10).

10. Pneumatique de véhicule selon une ou plusieurs des revendications 1 à 9, **caractérisé en ce que** les particules dures sont des particules de matériaux céramiques durs, notamment de carbures, de nitrures et/ou de borures, ainsi que des particules de verre, de matériaux vitreux ou de métal.

11. Pneumatique de véhicule selon une ou plusieurs des revendications 1 à 10, **caractérisé en ce que** les particules présentent une taille moyenne, rapportée à l'ensemble des particules ou à au moins 95 % des particules, dans la plage de 0,10 µm à 100 µm, notamment de 1 µm à 80 µm et de manière particulièrement préférée de 10 µm à 50 µm.

12. Pneumatique de véhicule selon l'une ou plusieurs des revendications 1 à 11, **caractérisé en ce que** le revêtement (11) provient d'une suspension qui contenait une proportion massique de particules de 5 % à 10 %.

13. Pneumatique de véhicule, qui est un pneu pour voitures particulières, un pneu pour camionnettes, un pneu de véhicules utilitaires ou un pneu d'autobus, et qui présente, dans les zones de talon, des composants de protection de talon constitués d'un matériau en caoutchouc ou présentant un matériau en caoutchouc, tels que des bandes de jante ou des profils de bourrelet (4), selon une ou plusieurs des revendications 1 à 12, **caractérisé en ce que** les sections de bord radialement intérieures (10c) des structures textiles planes (10) s'étendent dans les zones de talon respectivement jusqu'en dessous d'un des composants de protection de talon constitués d'un matériau en caoutchouc ou présentant un matériau en caoutchouc.

14. Pneumatique de véhicule selon la revendication 13, **caractérisé en ce que** les structures textiles planes (10) sont appliquées soit directement sur l'insert de carcasse (3), soit sur un profil de paroi latérale.

15. Pneumatique de véhicule, qui est un pneu pour voitures particulières ou camionnettes, présentant une zone de bande de roulement (1) avec un caoutchouc d'aile (1c) côté épaulement, un ensemble de ceinture (2) composé d'au moins deux couches de ceinture (2a) et des profils de bourrelet (4), selon une ou plusieurs des revendications 1 à 14, **caractérisé en ce que** les structures textiles planes (10) sont chacune appliquées directement sur l'insert de carcasse (3), les sections de bord radialement extérieures (10b) des structures textiles planes (10) recouvrant l'insert de carcasse (3) au moins dans les zones situées sous les caoutchoucs d'ailes (1c) et les sections de bord radialement intérieures (10c) des structures textiles planes (10) recouvrent l'insert de carcasse (3) en dessous des profils de bourrelet (4).

16. Pneumatique de véhicule selon la revendication 15, **caractérisé en ce que** les sections de bord radialement extérieures (10b) des structures textiles planes (10) s'étendent chacune jusque dans la zone située à l'intérieur de la couche de ceinture radialement intérieure (2a) ou d'un rembourrage de bord de ceinture (9).

17. Pneumatique de véhicule, plus souple qu'un pneu de bicyclette ou qu'un pneu diagonal, selon la revendication 1, **caractérisé en ce que** les sections de bord radialement intérieures (10c) des structures textiles planes (10) dans les zones de talon sont chacune appliquées directement sur les zones de contact avec la jante, sont exemptes de revêtement ou sont au moins partiellement pourvues du revêtement (11).
